(19) Europäisches Patentamt
European Patent Office
Office européen des brevets

(11) **EP 0 715 925 A1**

(12) **EUROPÄISCHE PATENTANMELDUNG**

(43) Veröffentlichungstag:
**12.06.1996 Patentblatt 1996/24**

(51) Int. Cl.⁶: **B23K 11/31**, F15B 15/14

(21) Anmeldenummer: **95117574.4**

(22) Anmeldetag: **08.11.1995**

(84) Benannte Vertragsstaaten:
**DE ES GB IT**

(30) Priorität: **10.12.1994 DE 9419815 U**

(71) Anmelder: **NIMAK**
**Automatisierte Schweisstechnik GmbH**
**D-57537 Wissen (DE)**

(72) Erfinder: **Nickel, Paul**
**D-57537 Wissen (DE)**

(74) Vertreter: **Patentanwälte**
**Dr. Solf & Zapf**
**Theodor-Heuss-Ring 1-3**
**50668 Köln (DE)**

(54) **Antriebszylinder für eine Schweissvorrichtung**

(57) Kolbenzylinderanordnung (6) als Antrieb für Elektroden (2,4) einer Schweißvorrichtung (1), bestehend aus einer doppelt wirkenden Zylindereinheit (10) mit einem Zylinder (12) und mindestens zwei durch eine Kolbenanordnung (14) abgeteilten Druckräumen, die über eine Ventilanordnung (16) zur Steuerung der Antriebsbewegungen wahlweise mit einem Druckmedium, insbesondere Druckluft, beaufschlagbar sind. Die Ventilanordnung (16) ist in einem an einem Zylinderdeckel (24) befestigten Ventilsteuerblock (34) untergebracht. Die Druckräume sind über interne, durch den Ventilsteuerblock (34) und den Zylinderdeckel (24) verlaufende Kanäle mit der Ventilanordnung (16) verbunden.

FIG. 1

## Beschreibung

Die vorliegende Erfindung betrifft eine Kolbenzylinderanordnung als Antrieb für Elektroden einer Schweißvorrichtung, bestehend aus einer doppelt wirkenden Zylindereinheit mit einem Zylinder und mindestens zwei durch eine Kolbenanordnung abgeteilten Druckräumen, die über eine Ventilanordnung zur Steuerung der Antriebsbewegungen wahlweise mit einem Druckmedium, insbesondere Druckluft, beaufschlagbar sind.

Derartige Kolbenzylinderanordnungen dienen dazu, bei Punktschweißvorrichtungen, sogenannten Schweißzangen, die Punktschweißelektroden zu schließen und zu öffnen, wobei die gesamte Zylindereinheit - üblicherweise durch einen Roboterarm - an den jeweiligen Schweißpunkt bewegt wird. Der Zylinder ist starr mit der einen Elektrode verbunden, während die Kolbenanordnung über eine Kolbenstange die bewegliche Elektrode betätigt. Dabei ist üblicherweise der gesamte Bewegungshub der beweglichen Elektrode in mindestens zwei Bereiche eingeteilt, und zwar einen Vorhub und einen Arbeitshub, um die Schweißvorrichtung zunächst im Schweißbereich des jeweiligen Werkstückes positionieren und teilschließen zu können, und die eigentlichen Schweißvorgänge erfolgen dann nur noch im recht kleinen Arbeitshub. Um nun diese Bewegungen, d.h. den Vorhub, den Arbeitshub und den jeweiligen Rückhub, zu steuern, ist eine Ventilanordnung vorgesehen, über die die Druckräume der Zylindereinheit gesteuert mit Druckmittel, insbesondere Druckluft, beaufschlagt werden. Bei bekannten Kolbenzylinderanordnungen der gattungsgemäßen Art ist nun nachteilig, daß die einzelnen Ventile der Ventilanordnung "irgendwo" am Zylinder befestigt und mit diesem bzw. den Druckräumen über Schlauchleitungen verbunden ist. Die Ventile und die Schläuche nehmen jedoch viel Raum in Anspruch, der die Bewegungen der Schweißvorrichtung am zu schweißenden Bauteil stark beeinträchtigt. Vor allem die Schläuche sind wartungsintensiv und stark der Gefahr von mechanischen Schäden ausgesetzt, was somit auch zu einer geringen Sicherheit führt (Schläuche können platzen). Bei Schweißrobotern tritt der weitere gravierende Nachteil auf, daß beim Programmieren (üblicherweise off-line; Stichwort "Rob Cad") die genaue Anordnung von Ventilen und Schläuchen nicht bekannt ist bzw. nicht berücksichtigt wird, so daß die Bewegungen der Schweißvorrichtung häufig derart nah am Objekt liegend programmiert werden, daß dann später die Ventile und/oder Schläuche das Objekt tangieren. Die Folge hiervon ist, daß spätere mechanische Schäden auftreten können, sofern nicht eine aufwendige Programm-Korrektur erfolgt.

Schließlich ist noch der folgende Umstand nachteilig. Die Ventilanordnung kann für verschiedene Anwendungen unterschiedlich ausgelegt sein. So gibt es einerseits Vorrichtungen mit nur zwei Ventilen (Vorhub- und Arbeitshubventil), bei denen der Rückhub durch bestimmte Druckdifferenzen gesteuert wird, und andererseits werden auch Ausführungen mit einem zusätzlichen Rückhubventil eingesetzt. Jede Ausführung erfordert eine individuelle Anordnung der einzelnen Ventile am Zylinder, wodurch ein richtiges, d.h. sofort zutreffendes Programmieren noch zusätzlich erschwert wird.

Der vorliegenden Erfindung liegt daher die Aufgabe zugrunde, ausgehend von dem beschriebenen Stand der Technik eine Kolbenzylinderanordnung der gattungsgemäßen Art zu schaffen, die sich durch weitgehend definierte Baumaße und dadurch einfache, schnelle und sofort korrekte Programmierbarkeit, erhöhte Sicherheit sowie gute Wartungsfreundlichkeit auszeichnet.

Erfindungsgemäß wird dies dadurch erreicht, daß die Ventilanordnung in einem an einem Zylinderdeckel befestigten Ventilsteuerblock untergebracht ist, wobei die Druckräume über interne, durch den Ventilsteuerblock und den Zylinderdeckel verlaufende Kanäle mit der Ventilanordnung verbunden sind.

Durch die Erfindung besitzt folglich die Ventilanordnung genau festgelegte äußere Begrenzungen, d.h. definierte und vorteilhafterweise äußerst kompakte Baumaße. Die bisher erforderlichen Schläuche wurden durch interne Kanäle ersetzt, was zu einer hohen Sicherheit durch Vermeidung von mechanischen Schäden führt. Zudem wird durch die internen, im mechanisch festen Ventilsteuerblock und im Zylinderdeckel gebildeten Kanäle auch ein nachteiliges elastisches Aufweitverhalten unter Druck beseitigt. Die Ventile sind aufgrund ihrer Anordnung in dem Ventilsteuerblock sehr wartungsfreundlich, indem sie bei Bedarf auf einfache und schnelle Weise einzeln oder gemeinsam demontiert bzw. ausgewechselt werden können.

Die durch die Erfindung erreichbare äußerst kompakte und von vornherein genau definierte Bauform der erfindungsgemäßen Kolbenzylinderanordnung führt zu wesentlichen Vorteilen beim Programmieren des Bewegungsablaufes der "Roboter-Schweißvorrichtung". Denn einerseits kann die Schweißvorrichtung sehr nah an das Werkstück gefahren werden, ohne daß berührungsbedingte Schäden zu befürchten wären, und andererseits sind die beim Off-Line-Programmieren bekannten bzw. berücksichtigbaren Baumaße auch später tatsächlich noch zutreffend, so daß aufwendige Programmkorrekturen vermieden werden können.

Der Ventilsteuerblock ist vorteilhafterweise auf einfache Weise mit einer Anlagefläche an einer Gegenfläche des Zylinderdeckels "angeflanscht", wobei in der Anlagefläche und der Gegenfläche ineinander übergehende und über Dichtungen nach außen abgedichtete Kanal-Mündungsöffnungen gebildet sind. Hierbei ist es nun besonders vorteilhaft, wenn die Kanal-Mündungsöffnungen hinsichtlich ihrer Anordnung auf der Gegenfläche des Zylinderdeckels und auf der Anlagefläche des Ventilsteuerblockes derart "standardisiert" sind, daß wahlweise eine von mindestens zwei hinsichtlich der Ventilanordnung unterschiedlichen Arten des Ventilsteuerblockes mit der Zylindereinheit verbindbar ist. Beispielsweise kann hierdurch wahlweise eine aus zwei Ventilen, einem Vorhubventil und einem Arbeitshubventil, bestehende Ventilanordnung an der Zylindereinheit angeordnet werden, oder die Zylindereinheit kann mit einer aus drei Ventilen, und zwar den Vorhub- und Arbeitshubventilen sowie einem zusätzlichen Rückhubventil, bestehenden Ventilanordnung ausgerüstet werden. Hierbei sind im Bereich der Zylindereinheit keinerlei Änderungen oder Modifikationen erforderlich, sondern es braucht wahlweise lediglich der jeweils gewünschte Ventilsteuerblock angeflanscht zu werden.

Weitere vorteilhafte Ausgestaltungsmerkmale der Erfindung sind in den Unteransprüchen sowie der folgenden Beschreibung enthalten.

Anhand von in der Zeichnung veranschaulichten bevorzugten Ausführungsbeispielen soll die Erfindung nun näher erläutert werden. Dabei zeigen:

Fig. 1     eine Seitenansicht einer mit einer erfindungsgemäßen Kolbenzylinderanordnung ausgerüsteten Schweißvorrichtung,

Fig. 2     einen Axialschnitt durch die Kolbenzylinderanordnung in einer ersten Ausführungsform ohne Darstellung des Ventilsteuerblockes,

Fig. 3     eine Draufsicht der Kolbenzylinderanordnung in Pfeilrichtung III gemäß Fig. 1 bzw. Fig. 2,

Fig. 4     eine vergrößerte Stirnansicht auf den hinteren Zylinderdeckel in Pfeilrichtung IV gemäß Fig. 2,

Fig. 5     eine vergrößerte Stirnansicht (Rückansicht) des Ventilsteuerblockes in Pfeilrichtung V gemäß Fig. 1 in einer beispielhaften Ausgestaltung mit zwei Ventilen,

Fig. 6     einen Axialschnitt der Kolbenzylinderanordnung analog zu Fig. 2, jedoch in einer Ausführungsvariante und mit Darstellung des Ventilsteuerblockes,

Fig. 7     eine Draufsicht in Pfeilrichtung VII gem. Fig. 6,

Fig. 8     eine vergrößerte Draufsicht des Ventilsteuerblockes in Pfeilrichtung VIII gemäß Fig. 6 in einer Ausführungsform mit drei Ventilen,

Fig. 9     einen Querschnitt in der Schnittebene IX-IX in Fig. 8,

Fig. 10    eine Seitenansicht von Einzelteilen der Ventilanordnung des erfindungsgemäßen Ventilsteuerblockes in gegenüber Fig. 9 vergrößerter Darstellung,

Fig. 11    eine Rückansicht des Ventilsteuerblockes in Pfeilrichtung XI gemäß Fig. 9,

Fig. 12    eine stark schematische Draufsicht der Kolbenzylinderanordnung mit Zweier-Ventilanordnung,

Fig. 13    ein Pneumatik-Schaltbild zu der Ausführung nach Fig. 12,

Fig. 14    eine Ansicht analog zu Fig. 12, jedoch mit Dreier-Ventilanordnung, und

Fig. 15    ein Pneumatik-Schaltbild zur Ausführung nach Fig. 14.

In den verschiedenen Figuren der Zeichnung sind gleiche Teile stets mit den gleichen Bezugszeichen versehen, so daß jede eventuell nur einmal unter Bezugnahme auf eine der Zeichnungsfiguren vorkommende Beschreibung eines Teils analog auch bezüglich der anderen Zeichnungsfiguren gilt, in denen dieses Teil mit dem entsprechenden Bezugszeichen ebenfalls zu erkennen ist.

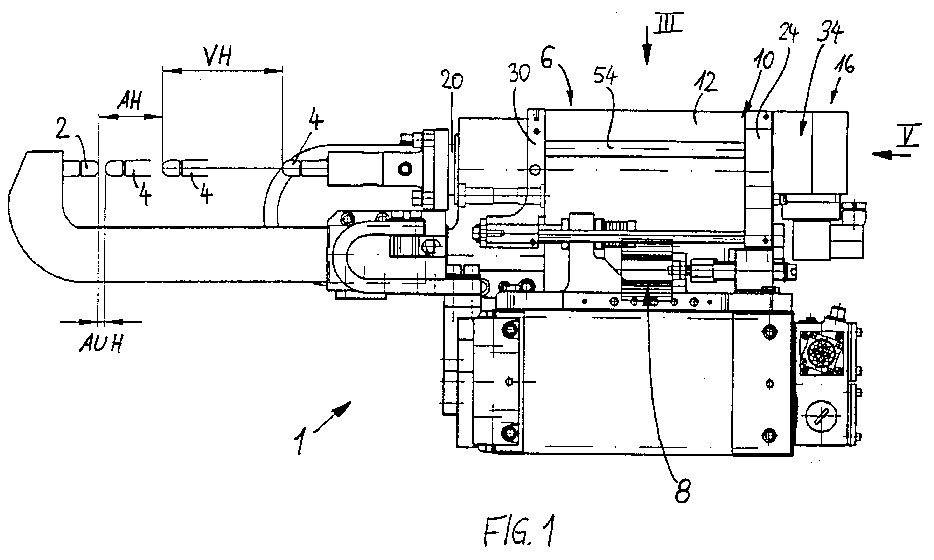

In Fig. 1 ist eine Punktschweißvorrichtung 1 ("Schweißzange") veranschaulicht, die eine feststehende Elektrode 2 und eine zu dieser relativbewegliche Elektrode 4 aufweist. Die bewegliche Elektrode 4 wird von einer erfindungsgemäßen Kolbenzylinderanordnung 6 betätigt, d.h. zum Schließen und Öffnen der Elektroden 2, 4 hin und her bewegt. Dabei ist vorzugsweise der gesamte Bewegungshub in einen Vorhub VH und einen Arbeitshub AH unterteilt. Ferner ist es vorteilhaft, wenn die gesamte Schweißeinheit über einen Ausgleichszylinder 8 derart "schwimmend" gelagert ist, daß sie relativ zu einem zu schweißenden Bauteil einen Ausgleichshub AUH ausführen kann. Hierauf wird im folgenden noch eingegangen werden.

Wie sich nun aus jeder der Figuren 1 bis 3, 6, 7 und 12 bis 15 ergibt, besteht die Kolbenzylinderanordnung 6 aus einer doppelt wirkenden Zylindereinheit 10 mit einem Zylinder 12, mindestens zwei durch eine Kolbenanordnung 14 abgeteilten Druckräumen (werden im folgenden noch beschrieben) und einer Ventilanordnung 16, über die die Druckräume zur Steuerung der Antriebsbewegungen wahlweise mit einem Druckmedium, insbesondere Druckluft, beaufschlagbar sind.

Vorzugsweise besteht die Kolbenanordnung 14 aus einem direkt in dem Zylinder 12 geführten, topfförmigen Vorhubkolben 18, sowie einem in dem topfförmigen Vorhubkolben 18 und damit indirekt im Zylinder 12 geführten, mit einer Kolbenstange 20 verbundenen Arbeitskolben 22. Die Kolbenstange 20 trägt an ihrem freien, aus dem Zylinder 12 ragenden Ende die bewegliche Elektrode 4. Bei dieser bevorzugten Ausführung ist zwischen dem Vorhubkolben 18 und einem hinteren, dem freien Ende der Kolbenstange 20 abgekehrten Zylinderdeckel 24 ein erster Druckraum 26, zwischen dem Vorhubkolben 18 und dem Arbeitskolben 22 ein zweiter Druckraum 28 sowie zwischen der gesamten, aus dem Arbeitskolben 22 und dem Vorhubkolben 18 bestehenden Kolbenanordnung 14 und einem gegenüberliegenden, vorderen Zylinderdeckel 30 ein die Kolbenstange 20 umschließender, dritter Druckraum 32 gebildet. Die Druckräume 26,28,32 sind nun über die Ventilanordnung 16 gesteuert mit Druck beaufschlagbar, und zwar der erste Druckraum 26 für den Vorhub VH, der zweite Druckraum 28 für den Arbeitshub AH und der dritte Druckraum 32 für den jeweiligen Rückhub von Vor- bzw. Arbeitshub.

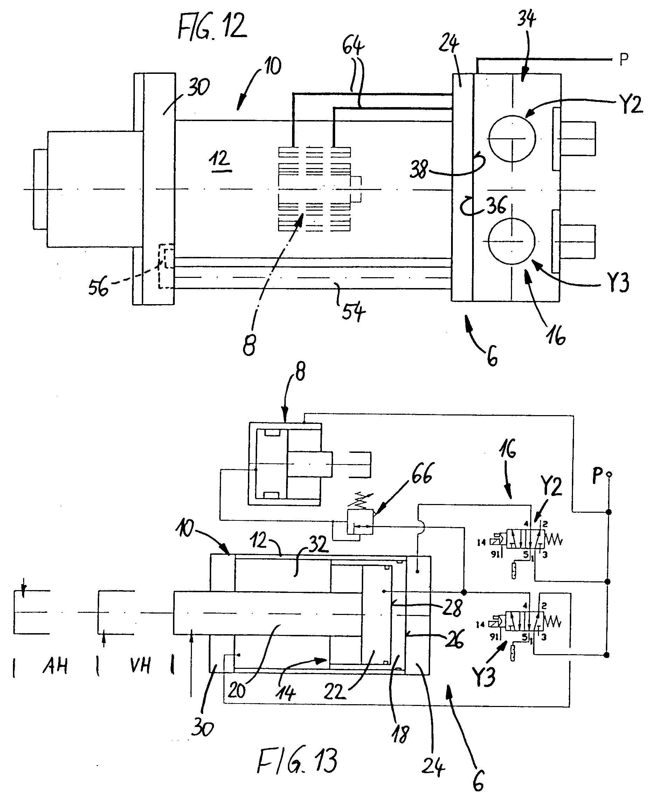

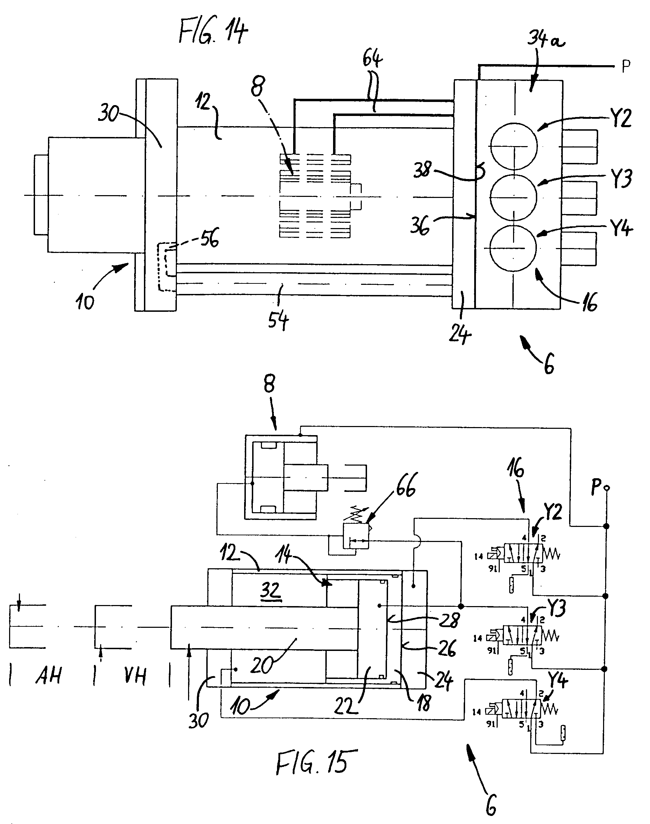

Wie sich am besten aus Fig. 12 und 13 entnehmen läßt, kann die Ventilanordnung 14 aus zwei Ventilen bestehen, und zwar aus einem Vorhubventil Y2 und einem Arbeitshubventil Y3. Bei der Ausführung nach Fig. 14 und 15 ist ein zusätzliches Rückhubventil Y4 vorgesehen. Die Funktion der einzelnen Schaltungen dürfte insbesondere anhand der Fig. 13 und 15 ohne weiteres nachvollziehbar sein, zumal die Schaltungen als solche an sich bekannt sind.

Erfindungsgemäß ist nun aber vorgesehen, daß die Ventilanordnung 16 in einem am hinteren Zylinderdeckel 24 befestigten Ventilsteuerblock 34 untergebracht ist, wobei die Druckräume 26,28,32 über interne, durch den Ventilsteuerblock 34 und den Zylinderdeckel 24 verlaufende Kanäle mit der Ventilanordnung 16 bzw. mit den einzelnen Ventilen Y2, Y3 und gegebenenfalls Y4 verbunden sind. Dabei liegt der bevorzugt einstückig und quaderförmig aus Metall gebildete Ventilsteuerblock 34 mit einer ebenen Anlagefläche 36 an einer ebenen Gegenfläche 38 des Zylinderdeckels 24 an, wobei in der Anlagefläche 36 und der Gegenfläche 38 ineinander übergehende und insbesondere durch Dichtungsringe abgedichtete Kanal-Mündungsöffnungen gebildet sind.

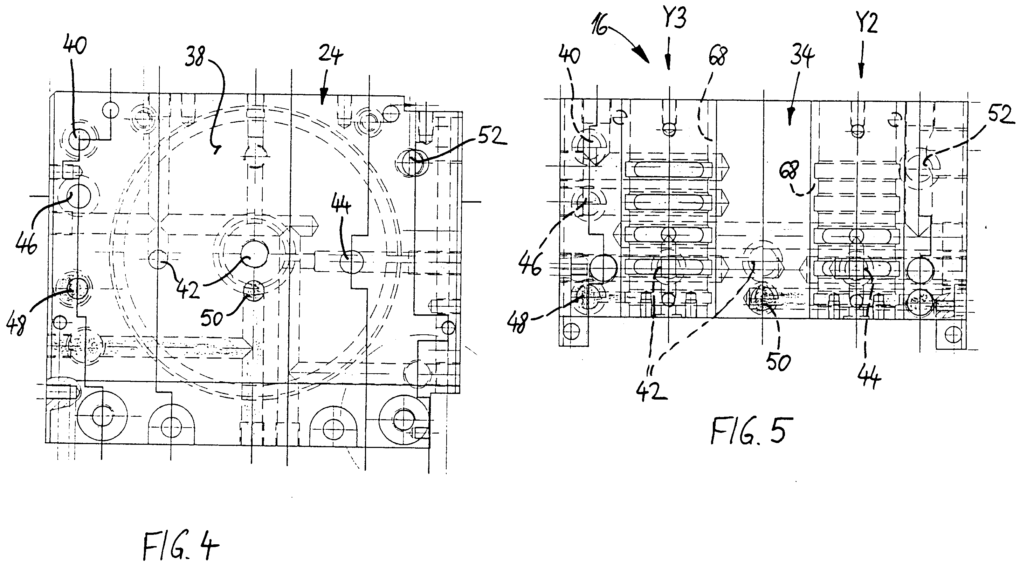

Wie sich nun am besten aus Fig. 4 und 5 sowie auch aus Fig. 11 ergibt, handelt es sich bei den erwähnten Kanal-Mündungsöffnungen im einzelnen um folgende Öffnungen:

Öffnungen 40 für Eingangsdruck P
Öffnungen 42 für Arbeitshub-Druck
Öffnungen 44 für Vorhub-Druck
Öffnungen 46 für Rückhub-Druck
Öffnungen 48 für Abluft-Arbeitshub
Öffnungen 50 für Abluft-Vorhub und
Öffnungen 52 für Abluft-Rückhub.

Durch Vergleich der Fig. 4 und 5 läßt sich gut erkennen, daß die genannten Öffnungen deckungsgleich sind, wenn der erfindungsgemäße Ventilsteuerblock 34 mit dem Zylinderdeckel 24 verbunden, insbesondere verschraubt ist.

Es ist nun besonders zweckmäßig, wenn die Kanal-Mündungen 40 bis 52 hinsichtlich ihrer Anordnung auf der Gegenfläche 38 des Zylinderdeckels 24 sowie auf der Anlagefläche 36 des Ventilsteuerblockes 34 derart "standardisiert" sind, daß wahlweise zumindest der Ventilsteuerblock 34 mit den zwei Ventilen Y2 und Y3 oder aber der Ventilsteuerblock 34a mit den drei Ventilen Y2, Y3 und Y4 mit der Zylindereinheit 10 bzw. dem Zylinderdeckel 24 verbindbar ist.

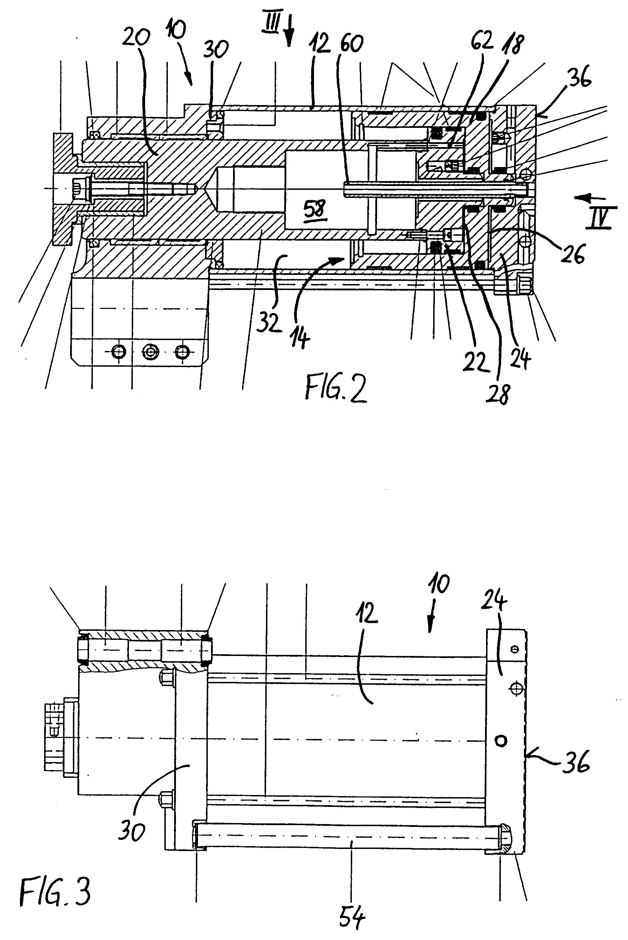

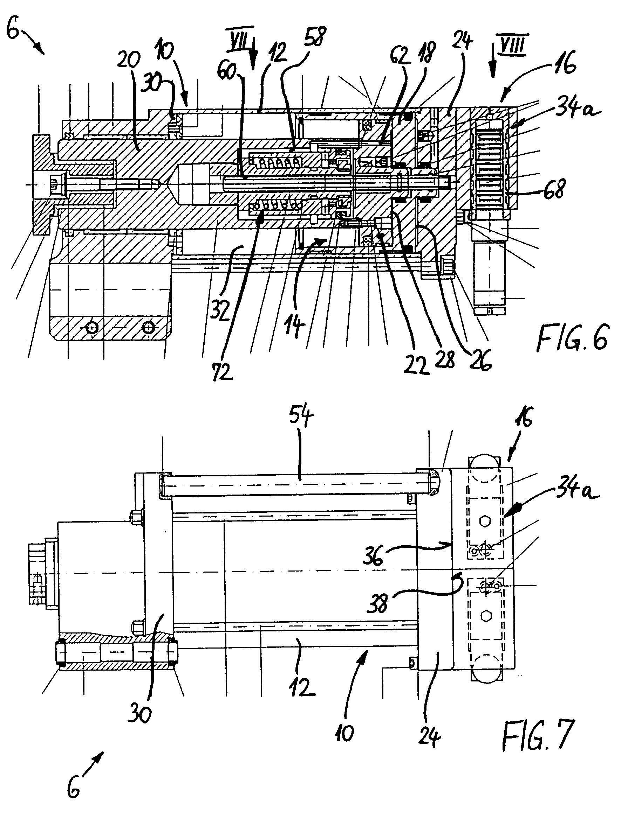

Wie sich nun aus Fig. 2 und 3 bzw. 6 und 7 ergibt, mündet die Vorhub-Kanalöffnung 44 des hinteren Zylinderdeckels 24 direkt in den Zylinder 12 bzw. den ersten Druckraum 26. Die Rückhub-Öffnung 46 ist über eine außerhalb des Zylinders 12 zwischen den beiden Zylinderdeckeln 24 und 30 verlaufende Rohrleitung 54 und einen durch den vorderen Zylinderdeckel 30 verlaufenden Kanal 56 (in Fig. 12 und 14 jeweils gestrichelt eingezeichnet) mit dem dritten Druckraum 32 verbunden. Schließlich ist der zweite Druckraum 28 über ein sich ausgehend von der Kanalöffnung 42 des Zylinderdeckels 24 zentrisch und axial durch den Vorhubkolben 18 und den Arbeitskolben 22 hindurch in eine Innenkammer 58 der Kolbenstange 20 erstreckendes Rohr 60 sowie über mindestens einen von der Innenkammer 58 ausgehend durch die Wandung der Kolbenstange 20 und den Arbeitskolben 22 verlaufenden Kanal 62 mit der Ventilanordnung 16 verbunden (siehe hierzu insbesondere Fig. 2 bzw. 6).

Der oben bereits kurz erwähnte Ausgleichszylinder 8 zur schwimmenden, bewegungs- und kraftausgleichenden Lagerung der Zylindereinheit 10 beim Schweißvorgang ist bevorzugt mit der Ventilanordnung 16 bzw. dem Ventilsteuerblock 34 bzw. 34a, und zwar speziell mit dem Arbeitshubventil und einem Hauptdruckanschluß, über Kanäle des Ventilsteuerblockes 34 und des hinteren Ventildeckels 24 sowie über von dem hinteren Ventildeckel 24 ausgehende Schlauchleitungen 64 verbunden (siehe hierzu insbesondere Fig. 12 und 14). Dabei ist gemäß Fig. 13 und 15 dem Ausgleichszylinder 8 vorzugsweise ein Druckminderer 66 vorgeschaltet, wobei dieser Druckminderer 66 zweckmäßigerweise ebenfalls in den Ventilsteuerblock 34 integriert ist (in eine entsprechende Bohrung eingesetzt). Wie sich anhand der Schaltungen in Fig. 13 und 15 leicht erkennen läßt, dient der Druckminderer 66 dazu, den Druck auf der größeren Kolbenfläche des Ausgleichszylinders 8 so zu reduzieren, daß die Kräfte in beiden Richtungen zumindest annähernd gleich sind (nach der Beziehung $p_1 \cdot A_1 = p_2 \cdot A_2$), um die gewünschte "schwimmende Lagerung" zu erreichen.

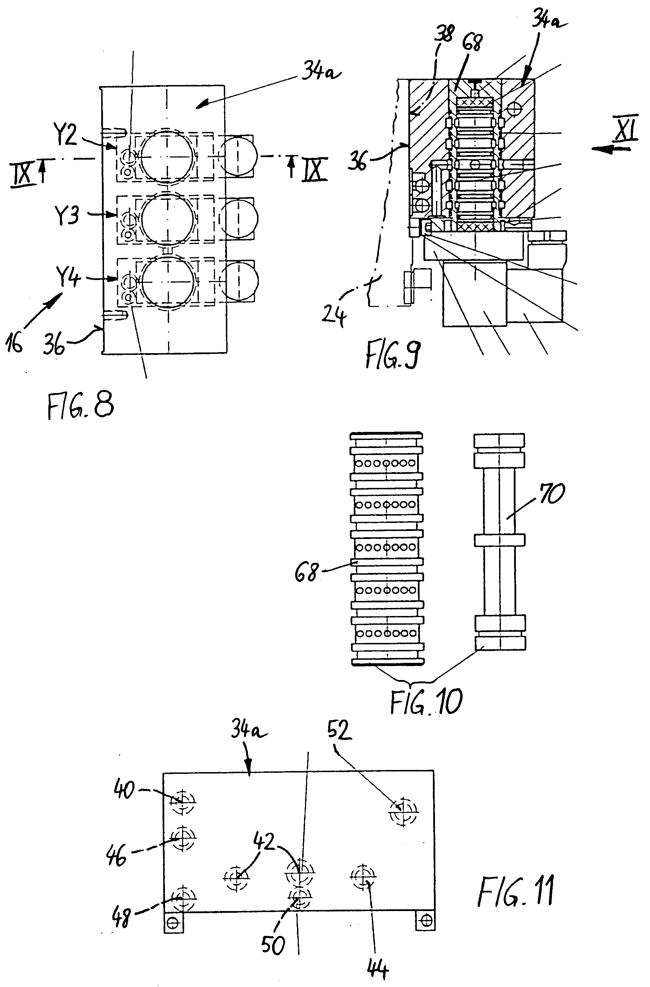

Die im Ventilsteuerblock 34 integriert angeordneten Ventile Y2, Y3 und gegebenenfalls Y4 sind bevorzugt als Schieberventile, und zwar insbesondere als 5/2-Wegeventile, ausgebildet. Hierbei ist es zudem besonders vorteilhaft, wenn jedes Schieberventil - siehe hierzu insbesondere Fig. 10 - einen in einer Bohrung des Ventilsteuerblockes 34 sitzenden, hülsenförmigen Ventileinsatz 68 aufweist, in dem ein Ventilschieber 70 geführt ist, wobei dann der Ventileinsatz 68 vorzugsweise aus einem verschleißfesten Material, insbesondere Messing, besteht. Der Ventileinsatz 68 bildet somit eine Art "Ventilgehäuse" und macht eine einfache und schnelle Auswechselbarkeit der aus dem Einsatz 68 und dem Schieber 70 bestehenden Einheit möglich.

Bei der in Fig. 6 veranschaulichten Ausführungsform der erfindungsgemäßen Kolbenzylinderanordnung 6 ist vorzugsweise eine - an sich bekannte - Einrichtung 72 zur Arbeitsgeräuschdämpfung vorgesehen, wobei diese Einrichtung 72 insbesondere innerhalb der Innenkammer 58 der Kolbenstange 20 untergebracht ist.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

**Patentansprüche**

1. Kolbenzylinderanordnung (6) als Antrieb für Elektroden (2,4)) einer Schweißvorrichtung (1), bestehend aus einer doppelt wirkenden Zylindereinheit (10) mit einem Zylinder (12) und mindestens zwei durch eine Kolbenanordnung (14) abgeteilten Druckräumen (26,28,32), die über eine Ventilanordnung (16) zur Steuerung der Antriebsbewegungen wahlweise mit einem Druckmedium, insbesondere Druckluft, beaufschlagbar sind,
   **dadurch gekennzeichnet,** daß die Ventilanordnung (16) in einem an einem Zylinderdeckel (24) befestigten Ventilsteuerblock (34;34a) untergebracht ist, wobei die Druckräume (26,28,32) über interne, durch den Ventilsteuerblock (34;34a) und den Zylinderdeckel (24) verlaufende Kanäle mit der Ventilanordnung (16) verbunden sind.

2. Kolbenzylinderanordnung nach Anspruch 1,
   **dadurch gekennzeichnet,** daß der Ventilsteuerblock (34;34a) mit einer Anlagefläche (36) an einer Gegenfläche (38) des Zylinderdeckels (24) anliegt, wobei in der Anlagefläche (36) und der Gegenfläche (38) ineinander übergehende Kanal-Mündungsöffnungen (40 bis 52) gebildet sind.

3. Kolbenzylinderanordnung nach Anspruch 2,
   **dadurch gekennzeichnet,** daß die Kanal-Mündungsöffnungen (40 bis 52) hinsichtlich ihrer Anordnung auf der Gegenfläche (38) des Zylinderdeckels (24) und auf der Anlagefläche (36) des Ventilsteuerblockes (34;34a) derart standardisiert sind, daß wahlweise eine von mindestens zwei hinsichtlich der Ventilanordnung (14) unterschiedlichen Arten (34;34a) des Ventilsteuerblockes mit der Zylindereinheit (10) verbindbar ist.

4. Kolbenzylinderanordnung nach einem oder mehreren der Ansprüche 1 bis 3,
   **dadurch gekennzeichnet,** daß die Kanäle des Zylinderdeckels (24) auf der dem Ventilsteuerblock (34;34a) bzw. der Gegenfläche (38) abgekehrten Seite teilweise direkt in den Zylinder (12) bzw. den jeweils zugeordneten Druckraum (26) sowie teilweise über eine außerhalb des Zylinders (12) zwischen dem ersten, hinteren Zylinderdeckel (24) und einem zweiten, vorderen Zylinderdeckel (30) verlaufende Leitung (54), insbesondere Rohrleitung, und einen durch den vorderen Zylinderdeckel (30) verlaufenden Kanal (56) in den jeweiligen Druckraum (32) münden.

5. Kolbenzylinderanordnung nach einem oder mehreren der Ansprüche 1 bis 4,
   **gekennzeichnet durch** einen außen an der Zylindereinheit (10) angeordneten Ausgleichszylinder (8) zur schwimmenden, bewegungs- und kraftausgleichenden Lagerung der Zylindereinheit (10) beim Schweißvorgang, wobei der Ausgleichszylinder (8) mit der Ventilanordnung (16) über Kanäle des Ventilsteuerblockes (34;34a) und des hinteren Ventildeckels (24) sowie über von dem hinteren Ventildeckel (24) ausgehende Leitungen (64), insbesondere Schlauchleitungen, verbunden ist.

6. Kolbenzylinderanordnung nach Anspruch 5,
   **dadurch gekennzeichnet,** daß dem Ausgleichszylinder (8) ein Druckminderer (66) vorgeschaltet ist, der vorzugsweise in den Ventilsteuerblock (34;34a) integriert ist.

7. Kolbenzylinderanordnung nach einem oder mehreren der Ansprüche 1 bis 6,
   **dadurch gekennzeichnet,** daß die Kolbenanordnung (14) aus einem in dem Zylinder (12) geführten, topfförmigen Vorhubkolben (18) und einem in dem topfförmigen Vorhubkolben (18) geführten, mit einer Kolbenstange (20) verbundenen Arbeitskolben (22) besteht, wobei zwischen dem Vorhubkolben (18) und dem hinteren Zylinderdeckel (24) ein erster Druckraum (26) und zwischen dem Vorhubkolben (18) und dem Arbeitskolben (22) ein zweiter Druckraum (28) sowie zwischen der aus dem Arbeitskolben (22) und dem Vorhubkolben (18) bestehenden Kolbenbenanordnung (14) und dem vorderen Zylinderdeckel (30) ein die Kolbenstange (20) umschließender, dritter Druckraum (32) gebildet sind.

8. Kolbenzylinderanordnung nach Anspruch 7,
   **dadurch gekennzeichnet,** daß in den ersten Druckraum (26) mindestens ein Kanal (44) des Zylinderdeckels (24) direkt mündet.

9. Kolbenzylinderanordnung nach Anspruch 7 oder 8,
   **dadurch gekennzeichnet,** daß der zweite Druckraum (28) über ein sich ausgehend von einem Kanal (42) des Zylinderdeckels (24) zentrisch und axial durch den Vorhubkolben (18) und den Arbeitskolben (22) hindurch in eine Innenkammer (58) der Kolbenstange (20) erstreckendes Rohr (60) sowie über mindestens einen von der Innenkammer (58) ausgehend durch die Kolbenstange (20) und den Arbeitskolben (22) verlaufenden Kanal (62) mit der Ventilanordnung (16) verbunden ist.

10. Kolbenzylinderanordnung nach einem oder mehreren der Ansprüche 1 bis 9,
**dadurch gekennzeichnet,** daß die Ventilanordnung (16) zumindest aus einem Vorhubventil (Y2) und einem Arbeitshubventil (Y3) besteht.

11. Kolbenzylinderanordnung nach einem oder mehreren der Ansprüche 1 bis 10,
**dadurch gekennzeichnet,** daß die Ventilandordnung (16) ein zusätzliches Rückhubventil (Y4) aufweist.

12. Kolbenzylinderanordnung nach einem oder mehreren der Ansprüche 1 bis 11,
**dadurch gekennzeichnet,** daß die im Ventilsteuerblock (34;34a) integriert angeordneten Ventile (Y2,Y3,Y4) als Schieberventile, insbesondere 5/2 Wegeventile, ausgebildet sind.

13. Kolbenzylinderanordnung nach Anspruch 12,
**dadurch gekennzeichnet,** daß jedes Schieberventil einen in einer Bohrung des Ventilsteuerblockes (34;34a) sitzenden, hülsenförmigen Ventileinsatz (68) aufweist, in dem ein Ventilschieber (70) geführt ist, wobei der Ventileinsatz (68) vorzugsweise aus einem verschleißfesten Material, insbesondere Messing, besteht.

14. Kolbenzylinderanordnung nach einem oder mehreren der Ansprüche 1 bis 13,
**gekennzeichnet durch** eine - insbesondere in der Innenkammer (58) der Kolbenstange (20) angeordnete - Einrichtung (72) zur Arbeitsgeräuschdämpfung.

FIG. 1

EP 0 715 925 A1

FIG.2

FIG.3

8

FIG. 5

FIG. 4

FIG. 6

FIG. 7

FIG. 8

FIG. 9

FIG. 10

FIG. 11

FIG. 12

FIG. 13

FIG. 14

FIG. 15

**Europäisches Patentamt**

# EUROPÄISCHER RECHERCHENBERICHT

Nummer der Anmeldung

EP 95 11 7574

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO-A-92 17311 (MACHINEFABRIEK SEMPRESS B.V.) * Zusammenfassung; Abbildung 1 * --- | 1-13 | B23K11/31 F15B15/14 |
| A | EP-A-0 462 939 (CAMOZZI PNEUMATIC S.P.A.) * Zusammenfassung; Abbildungen 1,5,7,8,10 * --- | 1,6 | |
| A | US-A-4 446 773 (HENRI EMONET) * das ganze Dokument * --- | 1,8,10, 14 | |
| A | US-A-5 167 182 (JAMES O. SIMS) * Zusammenfassung; Abbildungen 1-3 * ----- | 1-4 | |

|  |  |
|---|---|
| | **RECHERCHIERTE SACHGEBIETE (Int.Cl.6)** |
| | B23K F15B |

Der vorliegende Recherchenbericht wurde für alle Patentansprüche erstellt

| Recherchenort | Abschlußdatum der Recherche | Prüfer |
|---|---|---|
| BERLIN | 11.März 1996 | Cuny, J-M |